# EUROPEAN PATENT APPLICATION

(11) **EP 4 509 299 A1**
(43) Date of publication of application: **19.02.2025**
(21) Application number: 23191718.8
(22) Date of filing: 16.08.2023
(51) Int. Cl.: B29D 99/00

(54) **A METHOD FOR MANUFACTERING A WIND TURBINE ROTOR BLADE OR A LONGITUDINAL SEGMENT THEREOF**

(71) Applicant: Nordex Energy SE & Co. KG, 22419 Hamburg (DE)
(72) Inventor: ZAROCHENTSEV, Alexander, 22419 Hamburg (DE); BELEITES, Kalle, 22419 Hamburg (DE); FABRI, Patrick Roman, 22419 Hamburg (DE)
(74) Representative: Hauck Patentanwaltspartnerschaft mbB

(57) **Abstract**

A method for manufacturing a wind turbine rotor blade or a longitudinal segment of a wind turbine rotor blade, the wind turbine rotor blade or longitudinal segment having a longitudinal axis, the method comprising the following steps:

• providing a first wind turbine rotor blade shell member (10) having an end section (14). wherein the end section (14) comprises a laminate with an outer surface (16) and an inner surface (18) and a laminate thickness (20) measured between the outer surface (16) and the inner surface (18). wherein the first wind turbine rotor blade shell member (10) is arranged in a first mold (30).

• bonding a first stiffening frame member (22) to the inner surface (18) of the laminate of the end section (14) of the first wind turbine rotor blade shell member (10) while the first wind turbine rotor blade shell member (10) is arranged in the first mold (30). the first stiffening frame member (22) extending along a circumferential direction and having a height (38) of at least 50 % of the laminate thickness (20), measured in a radial direction,

• providing a second wind turbine rotor blade shell member having an end section (14).

• connecting the first wind turbine rotor blade shell member (10) and the second w ind turbine rotor blade shell member to each other so that an access opening is formed between the first stiffening frame member (22) and the second wind turbine rotor blade shell member.

## Description

Wind turbine rotor blades comprise a shell defining the aerodynamic shape of the wind turbine rotor blade. To handle the substantial loads in operation, various structural members such as spar caps and shear webs need to be integrated into or connected to the shell.

At their root end, which is to be connected to a wind turbine rotor hub, wind turbine rotor blades have a substantially circular cross section with a relatively thick laminate, often with embedded joining elements, in order to transfer the loads from the wind turbine rotor blade to the wind turbine rotor hub. Most wind turbine rotor blades in a root section comprise a bulkhead. During maintenance, the bulkhead serves as a working platform and also prevents materials, tools or even service personnel from falling into the wind turbine rotor blade. In operation, the bulkhead further prevents debris from falling out of the wind turbine rotor blade into the wind turbine rotor hub.

Although the wind turbine rotor blade root section is relatively stiff, the loads acting on the wind turbine rotor blade during operation as well as during extended periods of storage may cause a certain deformation of the wind turbine rotor blade root section, often referred to as ovalization. Such a deformation may lead to failure of the wind turbine rotor blade structure, or to problems with a pitch bearing or other elements important for the desired operation of the wind turbine rotor.

From the document EP 2 497 941 B1 a wind turbine rotor blade with a root end bulkhead and a related method have become known. The bulkhead is mounted to an inner wall of the wind turbine rotor blade shell via an attachment part that comprises an elastomeric material. The elasticity of the attachment part shall make it easy to mount the bulkhead in the blade, as the attachment part can be folded into the opening of the wind turbine blade root. In addition, the elasticity of the attachment part shall address the problem that the bulkhead may be torn loose from the inner blade wall due to ovalization.

From the document EP 2 235 364 A1 a wind turbine rotor blade with a flexible flange for mounting a blade root bulkhead has become known. The flange shall provide stress relief for the bulkhead.

From the document WO 2020/086560 A1 a method of manufacturing a wind turbine rotor blade has become known. A shear web is assembled with two sections of a blade root bulkhead, which are glued to both sides of the shear web. The bulkhead sections may be D-shaped and may comprise a frame and a lid. The assembly is then placed in a lower wind turbine rotor blade half shell before an upper wind turbine rotor blade half shell is placed on top. This shall make it easy to position the shear web without a specific gantry, because the bulkhead sections serve as an installation guide.

From the document EP 3 447 280 B1 a bulkhead unit for a wind turbine rotor blade has become known. It comprises a plate-shaped, central part arranged in a radial direction. The central part is connected to another, peripheral bulkhead element which provides a mounting flange attached to an inner wall of a wind turbine rotor blade root section. The central part may be supported by a frame structure so that it can carry additional components of the wind turbine rotor, such as elements of a de-icing system. The bulkhead unit shall be pre-assembled and then lifted with a special lifting device into an installation position in the wind turbine rotor blade root section.

From the document US 2014/0377078 A1 a wind turbine rotor blade with a root stiffener has become known. The root stiffener shall be used to reduce the occurrence and/or amount of ovalization of a root portion of the wind turbine rotor blade. The root stiffener is ring-shaped and mounted to an inner circumference of the root portion. To this end, the root stiffener defines a plurality of radially oriented openings configured to receive fasteners for coupling the root stiffener to the root portion.

From the document US 2015/0093250 A1 a wind turbine rotor blade with a root stiffener assembly has become known. The root stiffener assembly shall be used to reduce the occurrence and/or amount of ovalization of a root portion of the wind turbine rotor blade. The root stiffener assembly includes a plurality of stiffening ribs coupled to the root portion so as to extend along an inner surface of the root portion. The plurality of stiffening ribs may be connected to each other so as to form a ring within the root portion.

Departing therefrom, it is an object of the invention to provide a method for manufacturing a wind turbine rotor blade or a longitudinal segment of a wind turbine rotor blade that is particularly stiff and accurate to shape.

This object is solved by the method of claim 1. Preferred aspects are given in the dependent claims.

The method is for manufacturing a wind turbine rotor blade or a longitudinal segment of a wind turbine rotor blade, wherein the wind turbine rotor blade or longitudinal segment has a longitudinal axis. The method comprises the following steps:
- providing a first wind turbine rotor blade shell member having an end section, wherein the end section comprises a laminate with an outer surface and an inner surface and a laminate thickness measured between the outer surface and the inner surface, wherein the first wind turbine rotor blade shell member is arranged in a first mold,
- bonding a first stiffening frame member to the inner surface of the laminate of the end section of the first wind turbine rotor blade shell member while the first wind turbine rotor blade shell member is arranged in the first mold, the first stiffening frame member extending along a circumferential direction and having a height of at least 50 % of the laminate thickness, measured in a radial direction,

- providing a second wind turbine rotor blade shell member having an end section,
- connecting the first wind turbine rotor blade shell member and the second wind turbine rotor blade shell member to each other so that an access opening is formed between the first stiffening frame member and the second wind turbine rotor blade shell member.

The method can be used for manufacturing a wind turbine rotor blade having a wind turbine rotor blade root and a wind turbine rotor blade tip. The wind turbine rotor blade may be adapted for a wind turbine having a rotor with horizontal axis. The method can also be used for manufacturing a longitudinal segment of a wind turbine rotor blade. The longitudinal segment may comprise a wind turbine rotor blade root or a wind turbine rotor blade tip. The longitudinal segment may also be an intermediate segment of a wind turbine rotor blade having neither a wind turbine rotor blade root, nor a wind turbine rotor blade tip.

The first wind turbine rotor blade shell member and the second wind turbine rotor plate shell member may be wind turbine rotor blade half shells, such as a pressure side half shell and a suction side half shell, or, if a longitudinal segment of a wind turbine rotor blade is to be manufactured, may be longitudinal segments of such half shells. The first and second wind turbine rotor blade shell members may be the only shell members of the wind turbine rotor blade or of the longitudinal segment thereof, or they may be combined with one or more additional shell members to form the entire wind turbine rotor blade or longitudinal segment thereof. When the first and second wind turbine rotor blade shell members are a suction side half shell and a pressure side half shell, for example, these may both extend from a wind turbine rotor blade leading edge to a wind turbine rotor blade trailing edge. However, an additional wind turbine rotor blade shell member such as, for example, a trailing edge shell member may be combined with the first and second wind turbine rotor blade shell members to form the entire wind turbine rotor blade or longitudinal segment thereof.

In any event, the first and second wind turbine rotor blade shell members each have an end section. These end sections form an end section of the wind turbine rotor blade or longitudinal segment thereof. In particular, they may form a wind turbine rotor blade root section adapted to be connected to a wind turbine rotor hub. However, the end section may also be a section arranged in an intermediate longitudinal position of a wind turbine rotor blade, adapted to be connected to another longitudinal segment of the wind turbine rotor blade. The end section of the wind turbine rotor blade or longitudinal segment thereof formed essentially by the end sections of the first and second wind turbine rotor blade shell members may be circular, in particular when the end section corresponds to a wind turbine rotor blade root section, or may have an oval shape or the shape of an aerodynamic profile, when the end section is arranged at an intermediate position of the wind turbine rotor blade.

The end sections of the first and second wind turbine rotor blade shell members each comprise a laminate of several layers of a reinforcing fiber material, such as glass or carbon fibers. For example, the laminate may comprise 20 or more layers of a fiber material, and may have a laminate thickness of 50 mm or more. Typically, the end sections each comprise a plurality of joining elements, such as steel sleeves having an inner thread, adapted for being connected to a wind turbine rotor hub or to another longitudinal segment of the wind turbine rotor blade by means of threaded bolts. In particular, the joining elements may be embedded in the laminate of the respective end section.

The first wind turbine rotor blade shell member is arranged in a first mold, in particular in a first manufacturing mold, in which the first wind turbine rotor blade shell member has been manufactured by placing various fiber materials and potentially additional structural elements such as core materials or prefabricated fiber-reinforced composite parts, placing a liquid polymer in the mold such that all other elements are embedded in the liquid polymer, and curing the polymer. The first wind turbine rotor blade shell member may be manufactured in the first mold, in particular using a vacuum infusion process. The first mold has a mold surface that corresponds to an outer/aerodynamic surface of the first wind turbine rotor blade shell member manufactured in the first mold.

In a second step of the method, a first stiffening frame member is bonded to the inner surface of the laminate of the end section of the first wind turbine rotor blade shell member while the first wind turbine rotor blade shell member is (still) arranged in the first mold. This means when the first stiffening frame member is bonded to the first wind turbine rotor blade shell member, the latter is still held in its desired shape, which is defined by the first mold, when the first stiffening frame member is connected thereto.

The first stiffening frame member extends along a circumferential direction, for example along an inner circumference of a circular end section, e.g. at a wind turbine rotor blade root. The first stiffening frame member may be arranged in a plane which is perpendicular to the longitudinal direction of the wind turbine rotor blade or of the longitudinal segment thereof. The first stiffening frame member has a height of at least 50 % of the laminate thickness, measured in a radial direction. The laminate thickness is measured between the outer surface and the inner surface of the end section, in particular at the longitudinal position of the end section where the first stiffening frame member is placed.

The height may also be larger, for example up to 100 %, up to 200 %, up to 300 % or up to 500 % of the laminate thickness. The first stiffening frame member is a stiff structural element that, by means of its stiffness and height, provides additional stiffness to the end section of the first wind turbine rotor blade shell member.

The step of bonding the first stiffening frame member to the inner surface of the laminate may comprise forming an adhesive bond using an adhesive, for example a liquid polymer as explained before, and may also comprise curing of the adhesive. The stiffness added by the first stiffening frame member therefore takes effect while the first wind turbine rotor blade shell member still is in its manufacturing mold. This means when de-molding the first wind turbine rotor blade shell member, the first stiffening frame member will contribute to maintaining the first wind turbine rotor blade shell member in its desired shape.

In the remaining steps of the method, a second wind turbine rotor blade shell member having an end section is provided and connected to the first wind turbine rotor blade shell member. Following this connection, there is an access opening between the first stiffening frame member and the second wind turbine rotor blade shell member. The access opening may have dimensions sufficiently large so that a person can easily enter the interior of the wind turbine rotor blade or longitudinal segment thereof through the access opening.

A major advantage of the inventive method is that the first wind turbine rotor blade shell member is already provided with the first stiffening frame member while the first wind turbine rotor blade shell member still is in the first mold. When de-molding the first wind turbine rotor blade shell member, the first stiffening frame member prevents any ovalization or other deformation of the first wind turbine rotor blade shell member right away, during further manufacturing steps as well as during storage and transportation. At the same time, any work required inside of the wind turbine rotor blade or longitudinal segment thereof can be carried out easily, as there still is easy access through the access opening.

In an aspect, the end section of the second wind turbine rotor blade shell member comprises a laminate with an outer surface and an inner surface and a laminate thickness measured between the outer surface and the inner surface, wherein the second wind turbine rotor blade shell member is arranged in a second mold, wherein the method comprises a further step of:
- bonding a second stiffening frame member to the inner surface of the laminate of the end section of the second wind turbine rotor blade shell member while the second wind turbine rotor blade shell member is arranged in the second mold, the second stiffening frame member extending along a circumferential direction and having a height of at least 50 % of the laminate thickness of the end section of the second wind turbine rotor blade shell member, measured in a radial direction,
wherein the access opening is formed between the first stiffening frame member and the second stiffening frame member.

In this aspect, the second wind turbine rotor blade shell member is stabilized by a second stiffening frame member bonded thereto in the same way as has been explained above for the first wind turbine rotor blade shell member. The access opening then is formed between the first stiffening frame member and the second stiffening frame member.

In an aspect, the first stiffening frame member and/or the second stiffening frame member is a prefabricated part comprising a fiber-reinforced composite material, wherein the fiber-reinforced composite material has cured before the respective stiffening frame member is placed in the respective mold. In general, the stiffening frame members can also be made of metal, for example. Another option is using a fiber-reinforced composite material for the stiffening frame members, and to cure this fiber-reinforced composite material only in the mold, together with the material forming the first and/or second wind turbine rotor blade shell member. Using a prefabricated part, however, allows to form a particularly well-defined, stiff and lightweight stiffening frame member.

In an aspect, the first stiffening frame member and/or the second stiffening frame member has a T-shaped cross-section. The "horizontal bar" of the T forms a two-sided flange section of the stiffening frame and is connected to the inner surface of the laminate of the end section of the respective wind turbine rotor blade shell member. The "vertical bar" of the T corresponds to the height of the stiffening frame and provides the desired stability. In this manner, a particularly stable bond is obtained. A comparable effect can be achieved with a first stiffening frame member and/or a second stiffening frame member that has an I-, C- or L-shaped cross section, wherein a "horizontal bar" of the I-, C- or L-shape is connected to the inner surface of the laminate of the end section of the respective wind turbine rotor blade shell member.

In an aspect, the first stiffening frame member and the second stiffening frame member form an open or closed stiffening ring. The stiffening ring may be circular. An open stiffening ring means, that there is a gap between the first stiffening frame member and the second stiffening frame member, preferably on both sides. The gap is located in the area of the bonding flanges between the first and the second rotor blade shell members. It provides a good access to this area for inspection of the adhesive bonding. A closed stiffening ring means that the first stiffening frame member and the second stiffening frame member are in contact at their ends. When both stiffening frame members together form a ring, a particularly effective stabilization against ovalization and other deformation is obtained.

In an aspect, the step of bonding the first stiffening frame member and/or the second stiffening frame member to the respective wind turbine rotor blade shell member is carried out after the respective wind turbine rotor blade shell member has cured. An adhesive is placed between the respective stiffening frame member and the respective wind turbine rotor blade shell member and forms an adhesive bond between these. This allows curing of the respective wind turbine rotor blade shell member without needing to account for the adjacent stiffening frame member, which may be an obstacle for example when closing the respective mold with a vacuum foil.

In an aspect, the step of bonding the first stiffening frame member and/or the second stiffening frame member to the respective wind turbine rotor blade shell member is carried out together with a step of manufacturing the respective wind turbine rotor blade shell member by means of infusion or injection of a liquid polymer into the respective mold. The liquid polymer connects the respective stiffening frame member and the respective wind turbine rotor blade shell member and forms an adhesive bond between these. This specific process allows forming an almost perfect bond between the respective wind turbine rotor blade shell member and the adjacent stiffening frame member, in particular when the latter is provided as a prefabricated part.

In an aspect, the step of bonding the first stiffening frame member and/or the second stiffening frame member to the respective wind turbine rotor blade shell member comprises placing a layer of a fiber material on top of the inner surface of the respective end section and over a surface of the respective stiffening frame member. Preferably, the layer is placed on both sides of the first and/or second stiffening frame member. It may cover at least partly the inner surface of the rotor blade shell members and the flanges of the T-shaped stiffening frames. The layer of fiber material further strengthens the bond and provides a smooth transition between the different parts.

In an aspect, after the step of connecting the first wind turbine rotor blade shell member and the second wind turbine rotor blade shell member, the first stiffening frame member and the second stiffening frame member are connected to each other by a layer of fiber material laminated over a surface of the first stiffening frame member and a surface of the second stiffening frame member. This additional layer of a fiber material further strengthens the stiffening structure formed by the stiffening frame members, in particular a stiffening ring.

In an aspect, a reinforcement bar is connected to the first stiffening frame member and/or to the second stiffening frame member before de-molding of the wind turbine rotor blade shell members, wherein the reinforcement bar is connected to two opposite points of a stiffening structure formed by the first stiffening frame member and/or the second stiffening frame member. The reinforcement bar provides an additional stiffening means. It may be used in particular during further manufacture and/or storage of the wind turbine rotor blade or longitudinal segment thereof, and may be removed and/or replaced by another structure (such as a root bulkhead, see below) later.

In an aspect, a root bulkhead is mounted to the first stiffening frame member and/or to the second stiffening frame member after de-molding of the wind turbine rotor blade shell members. In particular, the root bulkhead is mounted only after the work necessarily performed inside of the wind turbine rotor blade is completed. The stiffening frame members provide a particularly stable structure for mounting the root bulkhead thereto. The root bulkhead itself does not need to be involved in providing additional stiffness, it may just serve as a platform during maintenance work, as has been explained above. Mounting the root bulkhead to the stiffening frame members is also particularly easy, because the root bulkhead need not be fitted perfectly to the inner surfaces of the laminates of the respective end sections.

In an aspect, the first stiffening frame member and/or the second stiffening frame member comprise a positioning element for arranging the root bulkhead in a desired position. This makes it even more easy to join the root bulkhead to the stiffening frame members. For example, one or more pins may be used as positioning elements.

In an aspect, the root bulkhead has an outer diameter which is smaller than an inner diameter defined by the inner surfaces of the end sections. This makes placing the root bulkhead in the end section particularly easy.

In an aspect, a shear web is bonded to the first wind turbine rotor blade shell member and/or to the second wind turbine rotor blade shall member, the shear web having an end section which is bonded to the first stiffening frame member and/or to the second stiffening frame member. Bonding the shear web to the stiffening frame members provides additional stability, both for fixing the shear web and for preventing deformation of the end section.

In the following, the invention is explained in greater detail with reference to the drawings.
- Fig. 1: shows an end section of a first wind turbine rotor blade shell member with a first stiffening frame member in a perspective view,
- Fig. 2: shows the first wind turbine rotor blade shell member of Fig. 1 with a shear web in a perspective view,
- Fig. 3: shows parts of the arrangement of Fig. 2 with a reinforcement bar in a perspective view,
- Fig. 4: shows a longitudinal section through a first wind turbine rotor blade shell member with a first stiffening frame member in a schematic view,
- Fig. 5: shows another longitudinal section through a first wind turbine rotor blade shell member with a first stiffening frame member in a schematic view,
- Fig. 6: shows another longitudinal section through a first wind turbine rotor blade shell member with a first stiffening frame member and a shear web in a schematic view,
- Fig. 7: shows still another longitudinal section through a first wind turbine rotor blade shell member with a first stiffening frame member and a shear web in a schematic view,
- Fig. 8: shows the first wind turbine rotor blade shell member of Fig. 2 with a second stiffening frame member,
- Figs. 9a - 9c: show schematic views of three steps of a method for manufacturing a wind turbine rotor blade, and
- Fig. 10: shows a wind turbine rotor blade in a perspective view.

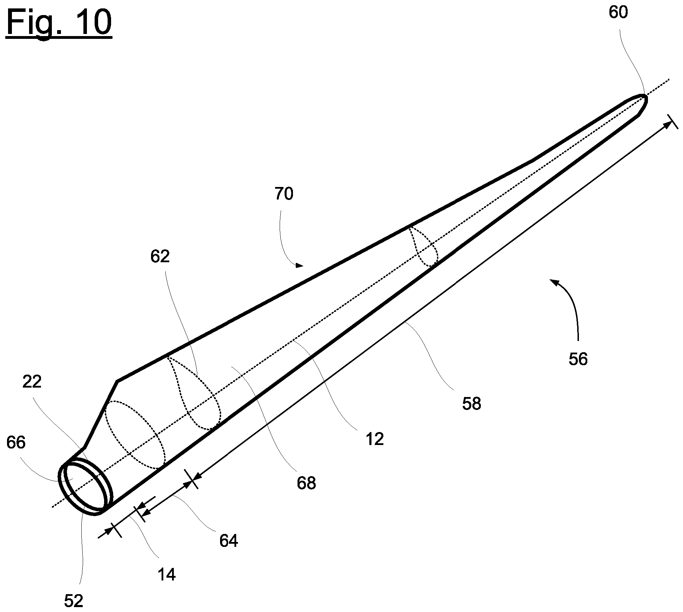

Figure 10 shows a wind turbine rotor blade 56 with a longitudinal axis 12. The wind turbine rotor blade 56 comprises an end section 14 with a wind turbine blade root 66. The end section 14 is cylindrical. The outer longitudinal section 58 comprises the wind turbine rotor blade tip 60 and has an aerodynamic profile 62. Between the end section 14 and the outer longitudinal section 58, the wind turbine rotor blade 56 has an intermediate section 64 forming a transition between the cylindrical cross section of the end section 14 and the aerodynamic profile 62 of the outer longitudinal section 58. The wind turbine rotor blade 56 comprises a suction side half shell 70, which is a first wind turbine rotor blade shell member, and a pressure side half shell 68, which is a second wind turbine rotor blade shell member.

The end section 14 is provided with a stiffening frame comprising a first stiffening frame member 22 and a second stiffening frame member 52.

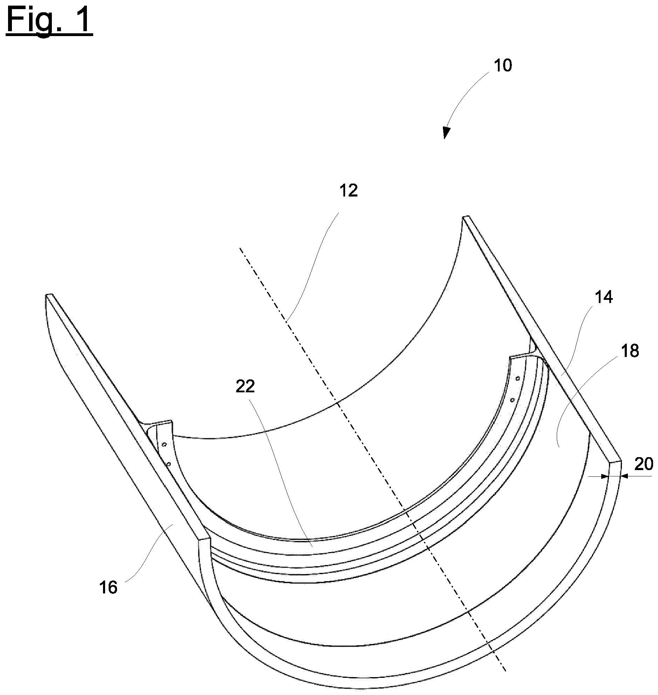

The first wind turbine rotor blade shell member 10 of Fig. 1 has a longitudinal axis 12 corresponding to the longitudinal axis 12 of a wind turbine rotor blade formed with the inventive method using the first wind turbine rotor blade shell member 10. The wind turbine rotor blade shell member 10 has an end section 14 which will form a part of a wind turbine rotor blade root section. The end section 14 comprises a laminate having an outer surface 16 and an inner surface 18 and comprising a laminate thickness 20 measured between the outer surface 16 and the inner surface 18.

Essentially, only the end section 14 of the wind turbine rotor blade shell number 10 is shown in Fig. 1. In the direction away from the viewer, the wind turbine rotor blade shell member 10 may extend up to a wind turbine rotor blade tip (not shown). The first wind turbine rotor blade shell member 10 then is a first wind turbine rotor blade half shell.

A first stiffening frame member 22 extends along a circumferential direction, along the entire inner half circle circumscribed by the end section 14. The first stiffening frame member 22 is bonded to the inner surface 18 of the end section 14.

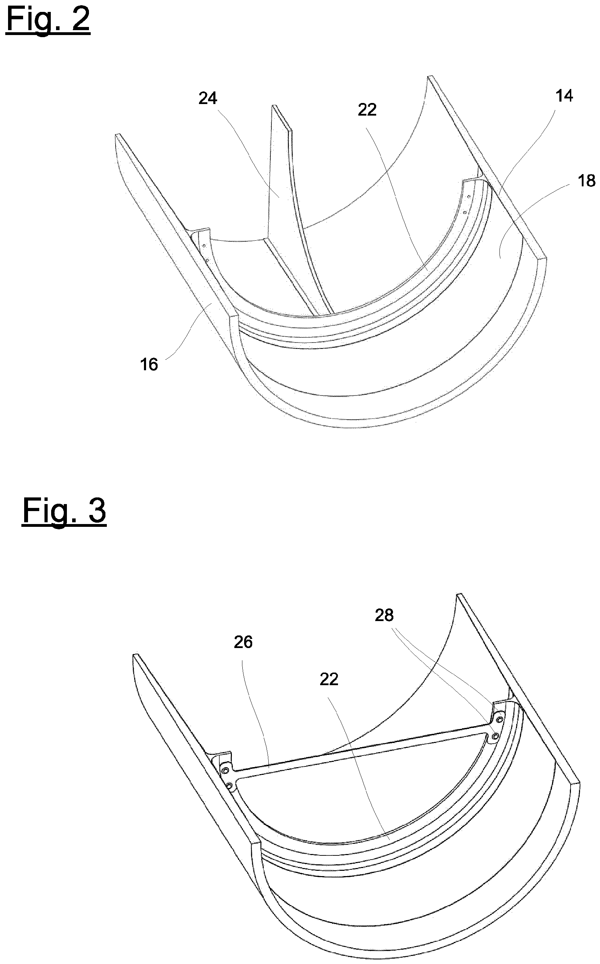

Figure 2 shows the elements of Fig. 1 in combination with a shear web 24 which extends in the longitudinal direction 12 and is also bonded to the inner surface 18 of the end section 14. Only those parts of the shear web 24 are shown in Fig. 2 that are arranged within the end section 14. It is understood that the shear web 24 in fact extends further along the longitudinal direction, away from the viewer, and possibly up to or close to a wind turbine rotor blade tip (not shown).

Figure 3 shows the elements of Fig. 2, wherein only a lower half of the shear web 24 is shown. In addition to the elements of Fig. 2, Fig. 3 also shows a reinforcement bar 26 which is fastened to two opposite ends of the first stiffening frame member 22 with two bolts 28 each.

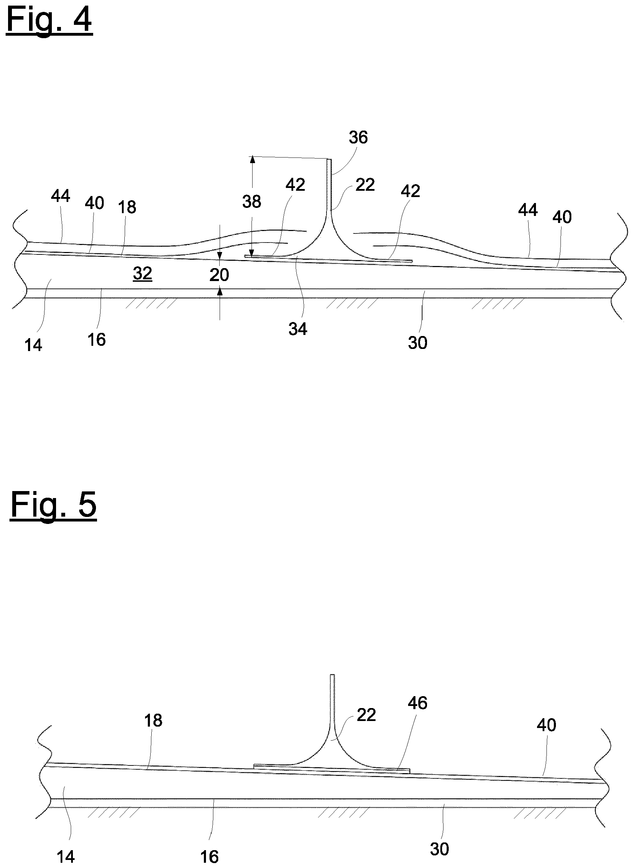

Figure 4 shows the elements of Fig. 1 in a longitudinal section, along the longitudinal axis 12. At the bottom of Fig. 4, there is a mold 30 in which the other elements are placed. The mold 30 has an inner surface that corresponds to an outer surface of the first wind turbine rotor blade shell member 10 manufactured therein. On top of this inner surface, a laminate 32 comprising various layers of a fiber material is arranged. The laminate thickness 20 measured between the outer surface 16 and the inner surface 18 of the end section 14 varies slightly along the length of the end section 14.

The first stiffening frame member 22 is a prefabricated part of a fiber-reinforced composite material. The first stiffening frame member 22 is shown on top of the inner surface 18 of the end section 14. It is shown in cross-section. The cross-section of the first stiffening frame member 22 is T-shaped, with a horizontal bar 34 forming two flanges bonded to the inner surface 18 of the end section 14, and a vertical bar 36 defining the height 38 of the first stiffening frame member 22. The height 38 of the first stiffening frame member 22 is larger than that laminate thickness 20 at the longitudinal position of the end section 14 where the first stiffening frame member 22 is placed.

Figure 4 also shows how the first stiffening frame member 22 is bonded to the end section 14. In the embodiment of Fig. 4, this is done simultaneously with a vacuum infusion process used for manufacturing the first wind turbine rotor blade shell member 10. To this end, the first stiffening frame member 22 is placed on the fiber material forming the laminate of the end section 14. Additional layers of a fiber material, in particular a biaxial glass fiber material, are placed on the inner surface 18 as well as on a surface 42 on an upper side of the "horizontal bar" of the T-shaped first stiffening frame member 22. Then, a vacuum foil 44 is arranged on top and connected to borders of the mold and to both sides of the first stiffening frame member 22, so that vacuum infusion of a resin can be carried out. In this way, a strong bond between the first stiffening frame member 22 and the end section 14 is obtained.

Figure 5 shows an alternative to the bonding process of Fig. 4. Here, the first wind turbine rotor blade shell member 10 with its end section 14 is first cured, together with an inner layer 40 of a fiber material which forms the inner surface 18 of the end section 14. Afterwards, the first stiffening frame member 22 is bonded to the inner surface 18 of the end section 14 by means of an adhesive 46 placed between the first stiffening frame member 22 and the inner surface 18.

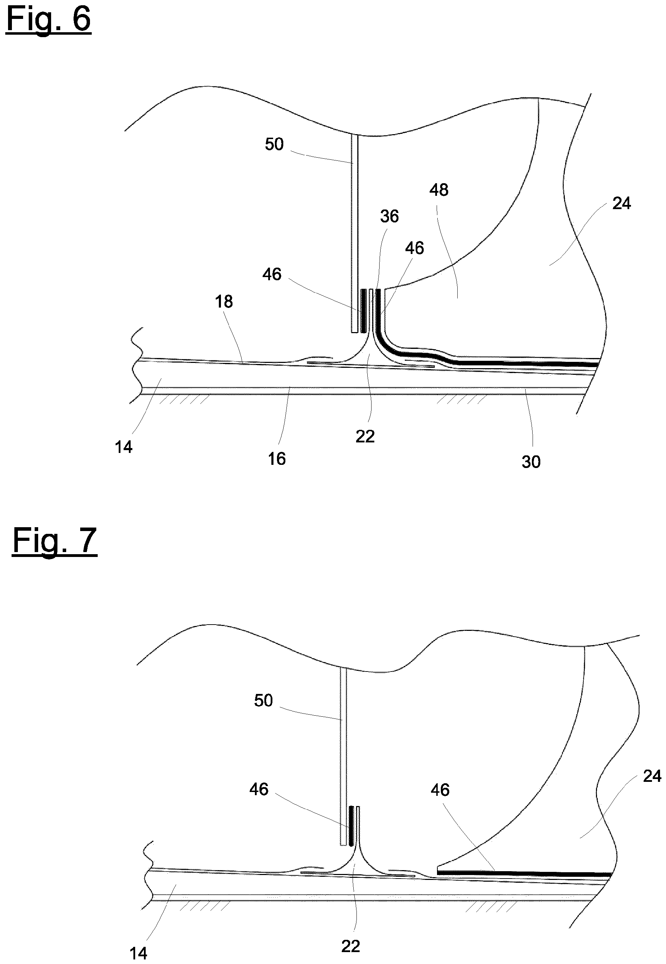

Figure 6 shows how the elements of Fig. 4 are complemented with additional parts to form the entire wind turbine rotor blade structure. In a first step, the shear web 24 is connected to the first wind turbine rotor blade shell member using a layer of an adhesive 46. The adhesive 46 is placed between the shear web 24 and the layer 40 of a fiber material forming the inner surface 18 of the end section 14. Further, the shear web 24 has an end section 48 which is bonded with the adhesive 46 to the first stiffening frame member 22. To the opposite side of the "vertical bar" 36 of the first stiffening frame member 22, a root bulkhead 50, which is basically a circular plate, is bonded to with an adhesive 46. The root bulkhead 50 may comprise one or more openings to allow access to the interior of the wind turbine rotor blade, or may be provided with such openings later.

Figure 7 shows an alternative for mounting a shear web 24 to the elements shown in Fig. 4. In this alternative, the shear web 24 does not have an end section 48 directly contacting the first stiffening frame member 22. Instead, the shear web 24 is bonded only to the inner surface 18 of the end section. A root bulkhead 50 is bonded to the first stiffening frame member 22 as has been explained with reference to Fig. 6.

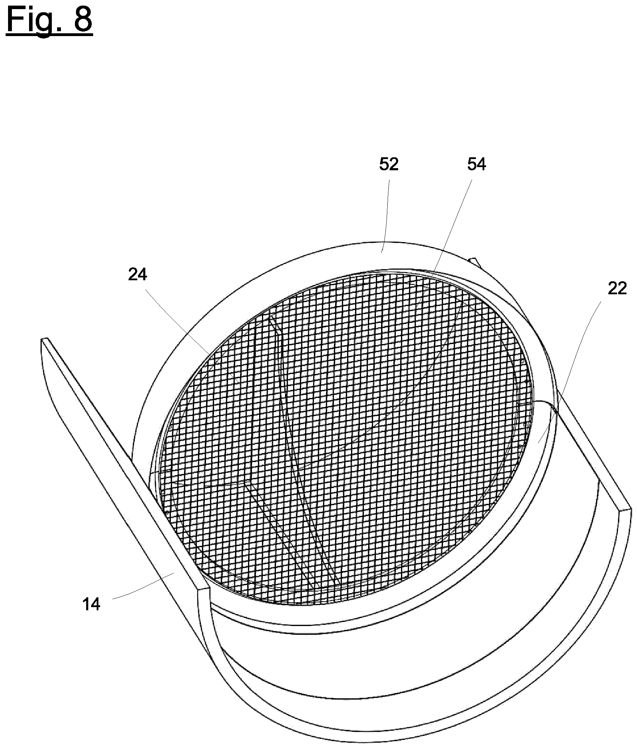

Figure 8 shows again the elements of Fig. 2 after these have been connected to a second wind turbine rotor blade shell member (not shown) and a second stiffening frame member 52, thereby forming a (closed) stiffening ring. One can see that a large access opening is formed between the first stiffening frame member 22 and the second stiffening frame member 52. In Fig. 8, this access opening has been closed not with a root bulkhead 50, but with a net 54 which does not provide any stiffening effect, but still protects the wind turbine from lose parts falling out of the wind turbine rotor blade 10.

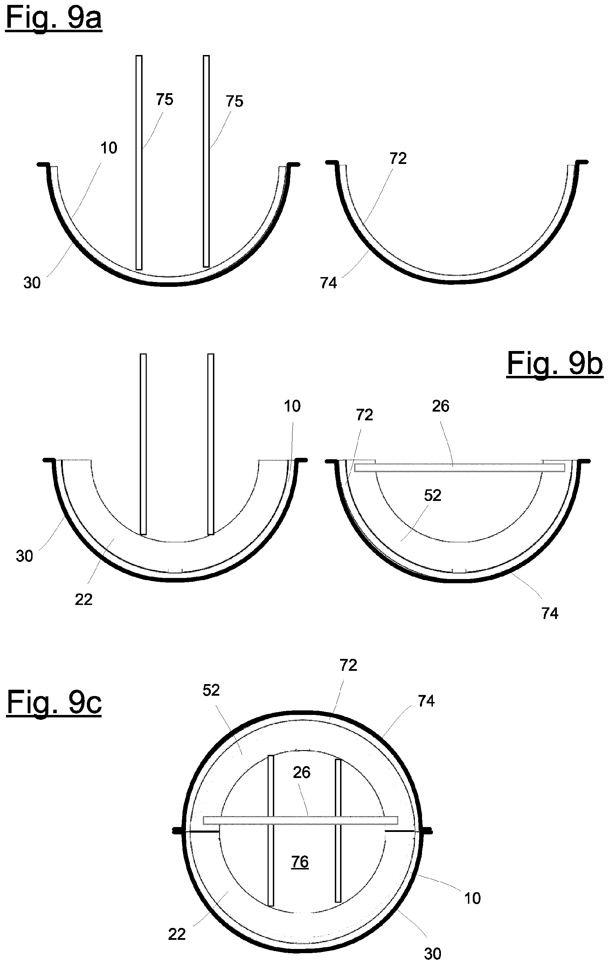

Figures 9a to 9c illustrate three stages of a method for manufacturing a wind turbine rotor blade. Figure 9a shows to the left a first wind turbine rotor blade shell member 10 (for example a suction side-half shell) with already assembled shear webs 75 arranged in a first mold 30 and to the right a second wind turbine rotor blade shell member 72 (for example a pressure side-half shell) arranged in a second mold 74.

In Fig. 9b, the same elements are shown after a first stiffening frame member 22 has been bonded to the first wind turbine rotor blade shell member 10, and a second stiffening frame member 52 has been bonded to the second wind turbine rotor blade shell member 72. The first and second wind turbine rotor blade shell members 10, 72 are still arranged in the respective molds 30, 74. The second stiffening frame member 52 is provided with a reinforcement bar 26. Alternatively, the reinforcement bar 26 could be provided at the first stiffening frame 22.

Fig. 9c shows the elements of Fig. 9b after the second mold 74 together with the second wind turbine rotor blade shell member 72 and the second stiffening frame member 52 bonded thereto has been placed on top of the first wind turbine rotor blade shell member 10 and the first mold 30. In this position and while still in their respective molds 30, 74, the first and second wind turbine rotor blade shell member 10, 72 are connected to each other. Between the two stiffening frame members 22, 52, an access 76 opening is formed.

### List of reference numerals

- 10: first wind turbine rotor blade shell member
- 12: longitudinal axis
- 14: end section
- 16: outer surface
- 18: inner surface
- 20: laminate thickness
- 22: first stiffening frame member
- 24: shear web
- 26: reinforcement bar
- 28: bolt
- 30: (first) mold
- 32: laminate
- 34: "horizontal bar" of T-shape
- 36: "vertical bar" of T-shape
- 38: height
- 40: layer of fiber material
- 42: surface
- 44: vacuum foil
- 46: adhesive
- 48: end section of shear web
- 50: root bulkhead
- 52: second stiffening frame member
- 54: net
- 56: wind turbine rotor blade
- 58: outer longitudinal section
- 60: wind turbine rotor blade tip
- 62: aerodynamic profile
- 64: intermediate section
- 66: wind turbine blade root
- 68: pressure side half shell
- 70: suction side half shell 70
- 72: second wind turbine rotor blade shell member
- 74: second mold
- 75: shear web
- 76: access opening

## Claims

1. A method for manufacturing a wind turbine rotor blade or a longitudinal segment of a wind turbine rotor blade, the wind turbine rotor blade or longitudinal segment having a longitudinal axis, the method comprising the following steps:
• providing a first wind turbine rotor blade shell member (10) having an end section (14), wherein the end section (14) comprises a laminate with an outer surface (16) and an inner surface (18) and a laminate thickness (20) measured between the outer surface (16) and the inner surface (18), wherein the first wind turbine rotor blade shell member (10) is arranged in a first mold (30),
• bonding a first stiffening frame member (22) to the inner surface (18) of the laminate of the end section (14) of the first wind turbine rotor blade shell member (10) while the first wind turbine rotor blade shell member (10) is arranged in the first mold (30), the first stiffening frame member (22) extending along a circumferential direction and having a height (38) of at least 50 % of the laminate thickness (20), measured in a radial direction,
• providing a second wind turbine rotor blade shell member having an end section (14),
• connecting the first wind turbine rotor blade shell member (10) and the second wind turbine rotor blade shell member to each other so that an access opening is formed between the first stiffening frame member (22) and the second wind turbine rotor blade shell member.

2. The method of claim 1, wherein the end section (14) of the second wind turbine rotor blade shell member comprises a laminate with an outer surface (16) and an inner surface (18) and a laminate thickness (20) measured between the outer surface (16) and the inner surface (18), wherein the second wind turbine rotor blade shell member is arranged in a second mold (30), wherein the method comprises a further step of:
• bonding a second stiffening frame member (52) to the inner surface (18) of the laminate of the end section (14) of the second wind turbine rotor blade shell member while the second wind turbine rotor blade shell member is arranged in the second mold (30), the second stiffening frame member extending along a circumferential direction and having a height (38) of at least 50 % of the laminate thickness (20) of the end section (14) of the second wind turbine rotor blade shell member, measured in a radial direction,
wherein the access opening is formed between the first stiffening frame member (22) and the second stiffening frame member (52).

3. The method of claim 1 or 2, wherein the first stiffening frame member (10) and/or the second stiffening frame member is a prefabricated part comprising a fiber-reinforced composite material, wherein the fiber-reinforced composite material has cured before the respective stiffening frame member (22) is placed in the respective mold (30).

4. The method of any of the claims 1 to 3, wherein the first stiffening frame member (22) and/or the second stiffening frame member has a T-shaped cross-section.

5. The method of any of the claims 2 to 4, wherein the first stiffening frame member (22) and the second stiffening frame member (52) form an open or closed stiffening ring.

6. The method of any of the claims 1 to 5, wherein the step of bonding the first stiffening frame member (22) and/or the second stiffening frame member (52) to the respective wind turbine rotor blade shell member (10) is carried out after the respective wind turbine rotor blade shell member (10) has cured.

7. The method of any of the claims 1 to 5, wherein the step of bonding the first stiffening frame member (22) and/or the second stiffening frame member (52) to the respective wind turbine rotor blade shell member (10) is carried out together with a step of manufacturing the respective wind turbine rotor blade shell member (10) by means of infusion or injection of a liquid polymer into the respective mold (30).

8. The method of any of the claims 1 to 7, wherein the step of bonding the first stiffening frame member (22) and/or the second stiffening frame member (52) to the respective wind turbine rotor blade shell member (10) comprises placing a layer (40) of a fiber material on top of the inner surface (18) of the respective end section (14) and over a surface (42) of the respective stiffening frame member (22, 52).

9. The method of any of the claims 2 to 8, wherein after the step of connecting the first wind turbine rotor blade shell member (10) and the second wind turbine rotor blade shell member, the first stiffening frame member (22) and the second stiffening frame member (52) are connected to each other by a layer of a fiber material laminated over a surface of the first stiffening frame member (22) and a surface of the second stiffening frame member (52).

10. The method of any of the claims 1 to 9, wherein a reinforcement bar (26) is connected to the first stiffening frame member (10) and/or to the second stiffening frame member before de-molding of the wind turbine rotor blade shell members (10), wherein the reinforcement bar (26) is connected to two opposite points of a stiffening structure formed by the first stiffening frame member (22) and/or the second stiffening frame member (52).

11. The method of any of the claims 1 to 10, wherein a root bulkhead (50) is mounted to the first stiffening frame member (22) and/or to the second stiffening frame member (52) after de-molding of the wind turbine rotor blade shell members (10).

12. The method of claim 11, wherein the first stiffening frame member (22) and/or the second stiffening frame member (52) comprise a positioning element for arranging the root bulkhead in a desired position.

13. The method of claim 11 or 12, wherein the root bulkhead (50) has an outer diameter which is smaller than an inner diameter defined by the inner surfaces (18) of the end sections (14).

14. The method of any of the claims 1 to 13, wherein a shear web (24) is bonded to the first wind turbine rotor blade shell member (10) and/or to the second wind turbine rotor blade shell member, the shear web (24) having an end section (48) which is bonded to the first stiffening frame member (22) and/or the second stiffening frame member (52).
